# EUROPÄISCHE PATENTANMELDUNG

(11) **EP 4 764 938 A1**
(43) Veröffentlichungstag der Anmeldung: **24.06.2026**
(21) Anmeldenummer: 25222144.5
(22) Anmeldetag: 10.12.2025
(51) Int. Cl.: G06F 30/23, G06F 30/15, G06F 119/04

(54) **VERFAHREN ZUR SIMULATIONSGESTÜTZTEN OMISSION VON BETRIEBSLASTSIGNALEN**

(30) Priorität: 18.12.2024 DE 102024138536
(71) Anmelder: IAMT - Ingenieurgesellschaft für allgemeine Maschinentechnik mbH, 08538 Weischlitz (DE)
(72) Erfinder: Schrank, Prof. Dr. Ronald, 14913 Jüterbog (DE)
(74) Vertreter: Köchling, Marietta

(57) **Zusammenfassung**

Der Erfindung betrifft ein Verfahren zur simulationsgestützten Omission von Betriebslastsignalen zur Verkürzung von Ermüdungsfestigkeitsprüfungen, insbesondere für mehrkanalig belastete Bauteile, gekennzeichnet durch
1. Lokale Spannungsberechnung mittels der Finite-Elemente-Methode (FEM) und
2. Lokale Ermüdungsschädigungsberechnung und Identifizierung der relevanten Umkehrpunkte, bestehend aus den Teilschritten:
2.1. Erstellung *Vergleichsspannungs-Zeit-Verlauf,*
2.2. Indizierte Rainflow-Zählung und Klassierung,
2.3. Schadensakkumulation.

3. Rekonstruktion der Last-Zeit-Verläufe anhand der relevanten Zeitpunkte

## Beschreibung

Die effiziente und gleichzeitig zuverlässige Omission von Betriebslastsignalen zur Verkürzung von Ermüdungsfestigkeitsprüfungen stellt insbesondere für mehrkanalig belastete Bauteile eine nicht triviale Herausforderung dar. Es wird ein neuartiges Omissionsverfahren vorgestellt, welches auf einer FEM-basierten Ermüdungsfestigkeitssimulation aufbaut und beliebig viele Lastkanäle zulässt. Ein spezieller Omissionsalgorithmus greift hierbei zunächst in die Abarbeitung der Rainflow-Matrix ein und identifiziert die erforderlichen Umkehrpunkte in den Spannungs-Zeit-Verläufen. Aus diesen werden im Folgenden neue Betriebslastsignale rekonstruiert. Zur Berücksichtigung der durch die Omission meist fülligeren Form des Beanspruchungskollektivs erfolgt ein Vorschlag für eine Korrektur der Prüflaufzeit.

Das vorgestellte Verfahren wird am Beispiel eines durch vier Lastkanäle beanspruchten Traglenkers veranschaulicht.

Die Serienfreigabe von Automobilfahrwerkskomponenten erfolgt bis heute auf der Grundlage experimenteller Ermüdungsfestigkeitsversuche. Im Hinblick auf Zeit-und Kosteinsparungen ist hierbei die Verkürzung der Prüfzeit erstrebenswert, wobei das Konzept der Omission als Reduktionsverfahren vorrangig ist, da das diesem Konzept zugrundeliegende ausschließliche Auslassen von Schwingspielen mit kleinen Amplituden den geringsten Einfluss auf das Prüfergebnis hat. Im Gegensatz dazu können Verfahren, bei denen die Reduzierung der Zyklenzahl beispielsweise durch eine Lasterhöhung ermöglicht wird, zu einer Beeinflussung des Prüfergebnisses führen.

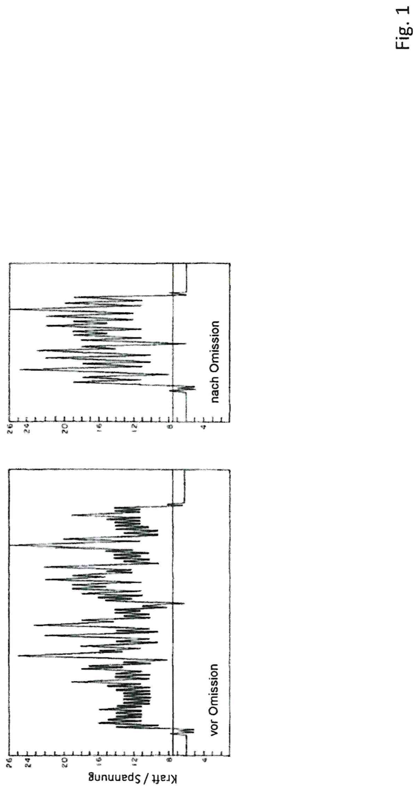

**Fig. 1** zeigt die prinzipielle Anwendung der Omission auf einen Last-Zeit-Verlauf.

An ein gewinnbringendes Omissionsverfahren bestehen hinsichtlich der Intensität der Omission (Menge der ausgelassenen Schwingspiele) grundsätzlich zwei konträre Anforderungen:
1. Intensität der Omission so groß wie möglich, um die maximale Zeit- und Kostenersparnis zu realisieren (Effizienz)
2. Intensität der Omission gering genug, um den Einfluss auf das Prüfergebnis in einem vernachlässigbaren Rahmen zu halten (Zuverlässigkeit)

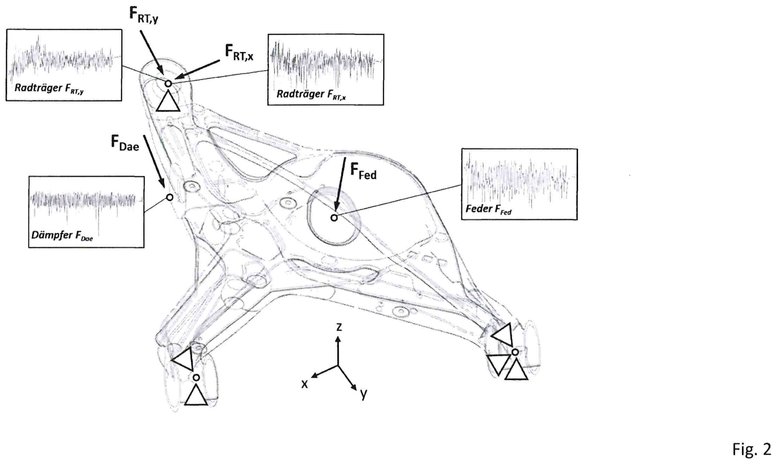

Bauteile, welche durch mehrere und in der Regel wenig korrelierte Last-Zeit-Signale beaufschlagt sind, stellen bezüglich dieser Anforderungen eine besondere Herausforderung dar, für welche bis heute keine allgemein anwendbare Methodik verfügbar ist. Der in **Fig. 2** gezeigt Traglenker einer PKW-Hinterachse ist bei vorgenommener Dreipunktlagerung beispielsweise durch vier einwirkende Last-Zeit-Verläufe beaufschlagt. Nachfolgend wird ein Verfahren vorgestellt, welches eine effiziente und zuverlässige Omission unter adäquater Berücksichtigung aller Last-Zeit-Kanäle erlaubt.

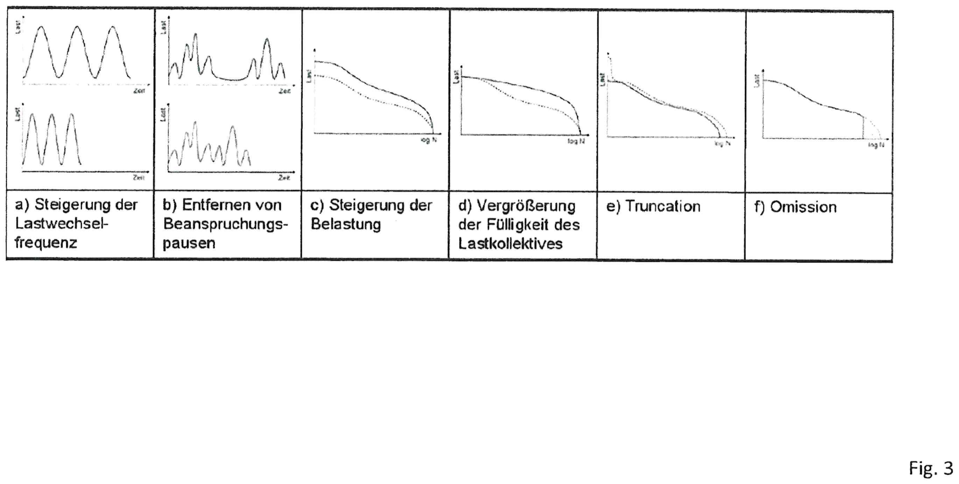

Im Stand der Technik sind zur Reduzierung von Versuchszeiten nach [1] folgende Maßnahmen möglich (siehe auch **Fig. 3****):**
a) Steigerung der Lastwechselfrequenz
   - durch Prüftechnik begrenzt, in der praktischen Anwendung oft wenig Potential zur Prüfzeitverkürzung
   - ohne Weiteres nicht für alle Werkstoffe und auch nicht bei zeitabhängigen Vorgängen (z. B. Korrosion, Kriechen) anwendbar
b) Entfernen von Beanspruchungspausen
   - Entfernung von Haltezeiten im Last-Zeit-Verlauf, in der praktischen Anwendung oft wenig Potential zur Prüfzeitverkürzung
   - ohne Weiteres nicht für alle Werkstoffe und auch nicht bei zeitabhängigen Vorgängen (z. B. Korrosion, Kriechen) anwendbar
c) Steigerung der Belastung
   - proportionale Vergrößerung aller Amplituden
   - durch Prüftechnik begrenzt, Gefahr der Änderung der Schädigungsmechanismen und Anrisslagen (z.B. infolge eingebrachter Plastifizierungen), Verfälschung des Einflusses von Eigenspannungen
   - ohne Weiteres nicht für alle Werkstoffe und auch nicht bei zeitabhängigen Vorgängen (z.B. Korrosion, Kriechen) anwendbar
d) Vergrößerung der Fülligkeit des Lastkollektivs
   - Aufbringung einer größeren Anzahl von Schwingspielen mit größeren Amplituden
   - Gefahr der Änderung der Schädigungsmechanismen und Anrisslagen (z.B. infolge eingebrachter Plastifizierungen), Verfälschung des Einflusses von Eigenspannungen
   - ohne Weiteres nicht für alle Werkstoffe und auch nicht bei zeitabhängigen Vorgängen (z.B. Korrosion, Kriechen) anwendbar
e) Truncation
   - Weglassen einzelner seltener Lastspitzen, falls diese an ermüdungskritischen Stellen Druckspannungen einbringen
   - konservative Verkürzung der Lebensdauer und im engeren Sinne Verfälschung des Prüfergebnisses
f) Omission
   - Weglassen von Schwingspielen mit kleiner Amplitude, da diese nur sehr kleine Schädigungsbeiträge leisten
   - Sehr effiziente Methode
   - Festlegung Omissionslevel (Grenze der Amplitude, unterhalb derer das Weglassen erfolgt) jedoch komplexes Problem
   - Omission auf Basis des Lastkollektivs wegen Reihenfolgeeffekte nicht immer geeignet
   - ohne Weiteres nicht für alle Werkstoffe und auch nicht bei zeitabhängigen Vorgängen (z.B. Korrosion, Kriechen) anwendbar

Die Omission erweist sich aufgrund der Effizienz und des größten Potentials an Versuchszeitverkürzung als Vorzugsverfahren und ist Gegenstand der vorliegenden Erfindung, wobei der gewählte methodische Ansatz die besondere Schwierigkeit der Festlegung des Omissionslevels bei Erhalt der Reihenfolgeeffekte löst. Die verbreiteten Lehrbücher zur Betriebsfestigkeit offenbaren nur wenig Erkenntnis.

In [2] wird pauschal ein Omissionslevel (hier als Verhältnis der maximalen Spannungsamplitude, welche ausgelassen wird, zur Dauerfestigkeit definiert) von 50% empfohlen.

In [1] wird diese Größenordnung für Stahlbauteile bestätigt, sofern die Lastwechsel mittelspannungskorrigiert sind.

Heute verbreitete Omissionsverfahren, die auch als Standard-Tools in Software Anwendungen zur Messsignal- und Datenverarbeitung enthalten sind, zielen in der Regel auf die direkte Bearbeitung der Last-Zeit-Verläufe ab. Dem lokalen Ermüdungsgeschehen am Bauteil wird damit nur ansatzweise Rechnung getragen, da insbesondere die Relevanz einzelner Lastkanäle in Bezug auf die ermüdungskritischen Stellen am Bauteil nicht bewertet wird. Die übliche Zugrundelegung "virtueller" Wöhlerlinien erscheint zur Erreichung der an die Omission gestellten Anforderungen (Effizienz und Zuverlässigkeit) ebenfalls nachteilig, da der primär für die Omission relevante Wöhlerlinienparameter -die Neigung- nur pauschal angenommen wird, tatsächlich aber ebenfalls wesentlich von der lokalen Beanspruchungssituation am Bauteil (z.B. der Kerbschärfe) beeinflusst ist.

Eine Literaturrecherche zu praktischen Anwendungsbeispielen von Omissionsverfahren liefert hauptsächlich Ergebnisse im Bereich Aerospace.

In [3] werden Aluminium-Materialproben mit Fokus auf die Lebensdauer (inkl. Risswachstum) untersucht und erzielte Prüfzeitreduktionen in Abhängigkeit vom Omissionslevel dargestellt. Die Untersuchungen beschränken sich auf einkanalige Belastungen und sind auf mehrkanalige Belastungen nicht übertragbar.

Die Omission an Composite-Strukturen wird in [4] und [5] dargestellt, wobei die zugrunde liegenden Methoden ebenfalls nur für einkanalige Belastungen möglich scheinen.

Der Nachteil klassischer Omissionsverfahren, oft keine ausreichende Versuchszeitreduzierung ermöglichen zu können, wird in [6] thematisiert und eine "smarte Komprimierung" als neue Methode ergänzt.

Zusammenfassend kann festgehalten werden, dass derzeit keine Omissionsverfahren verfügbar sind, welche die Anforderungen an Effizienz und Zuverlässigkeit insbesondere für mehrkanalig belastete Bauteile gleichermaßen erfüllen, sodass die Aufgabe der Erfindung darin besteht, ein solches Verfahren bereitzustellen, welches diese Anforderungen erfüllt.

Zur Lösung dieser Aufrage schlägt die Erfindung folgendes vor:
Die Erfüllung der Anforderungen an Effizienz und Zuverlässigkeit setzt die Berücksichtigung des lokalen Ermüdungsgeschehens am Bauteil voraus.

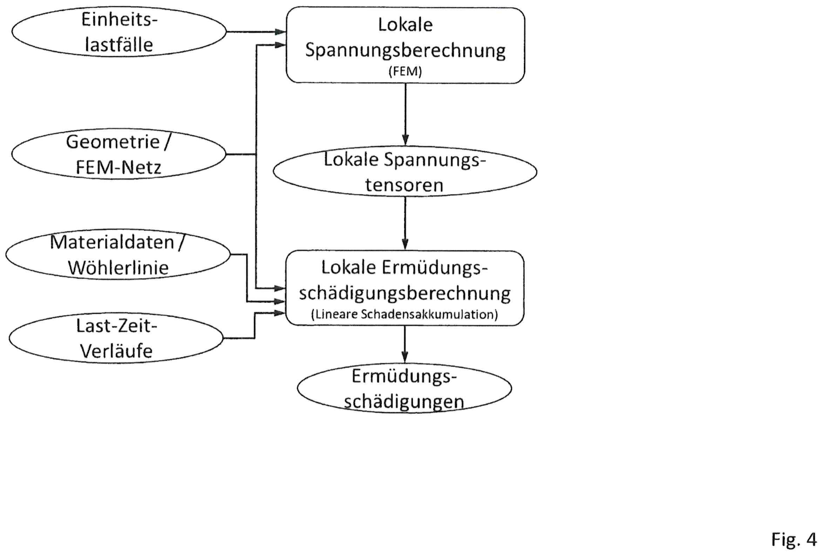

Entsprechend bilden die heutzutage praktizierten numerischen Methoden zur
Ermüdungsfestigkeitsanalyse/Lebensdauerberechnung eine geeignete Grundlage. Diese bestehen üblicherweise aus zwei Analyseschritten (siehe auch **Fig. 4****):**
1. Lokale Spannungsberechnung mittels der Finite-Elemente-Methode (FEM)
2. Lokale Ermüdungsschädigungsberechnung

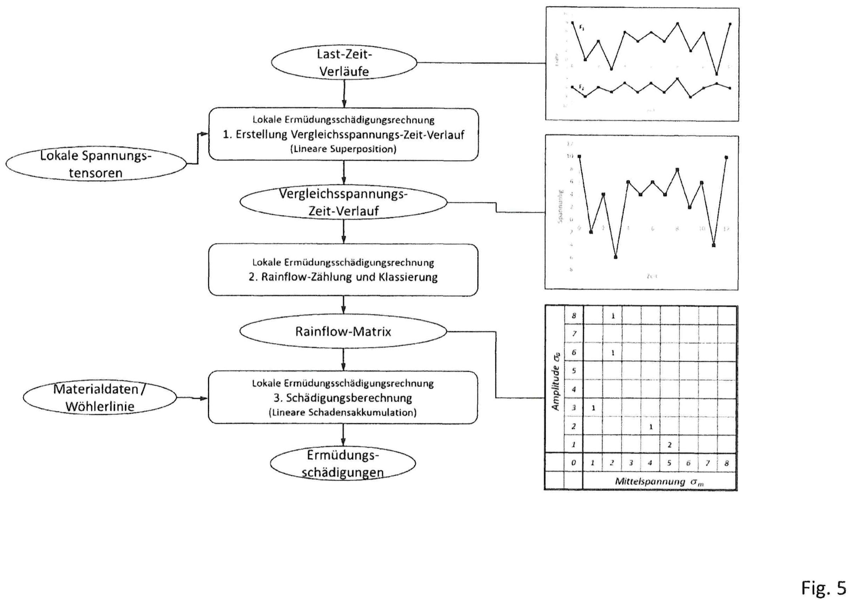

Der zweite Analyseschritt, die lokale Ermüdungsschädigungsberechnung, untergliedert sich hierbei in drei wesentliche Teilschritte (siehe auch **Fig. 5****)**, welche je zu analysierendem FE-Knoten und (bei Anwendung eines Schnittebenenverfahrens) je Schnittebene abzuarbeiten sind:
1. Erstellung Vergleichsspannungs-Zeit-Verlauf
2. Rainflow-Zählung und Klassierung
3. Schadensakkumulation

Um dem lokalen Ermüdungsgeschehen sowie dem lokalen Einfluss der einzelnen Lastkanäle bestmöglich Rechnung zu tragen und Effizienz sowie Zuverlässigkeit zu gewährleisten, wird die Omission nicht wie bisher auf Basis der einzelnen Last-Zeit-Verläufe vorgenommen, sondern nunmehr auf Basis des Vergleichsspannungs-Zeit-Verlaufs durchgeführt.

Entsprechend ist die Durchführung eines Analyseprozesses nach **Fig. 4** Voraussetzung für das neuartige Omissionsverfahren.

Der entsprechende Modellierungs- und Berechnungsaufwand ist als akzeptabel einzuschätzen, da im Rahmen der Bauteilentwicklung ohnehin entsprechende Simulationsmodelle vorliegen bzw. diese relativ schnell erzeugt und berechnet werden können. Zudem sind im Hinblick auf die Zielstellung der Omission (eine akkurate Berechnung aller Ermüdungsschädigungswerte im Detail ist zu diesem Zweck nicht zwingend erforderlich) insbesondere im Bereich von Schnittstellen Modellvereinfachungen möglich.

Zur Identifizierung der schädigungsrelevanten Zeitpunkte sind je zu analysierendem FE-Knoten (Schädigungshotspot) des Bauteils die erforderlichen Umkehrpunkte des an dem jeweiligen Knoten vorliegenden lokalen Vergleichsspannungs-Zeit-Verlaufs zu ermitteln, welche zum wesentlichen Schädigungsbeitrag führen. An jedem FE-Knoten liegt nach Bearbeitung somit eine Menge an Umkehrpunkten vor. Die sich über alle zu analysierenden FE-Knoten hinweg ergebende Vereinigungsmenge enthält dann alle Umkehrpunkte, welche für die Erstellung der neuen Last-Zeit-Verläufe erforderlich sind.

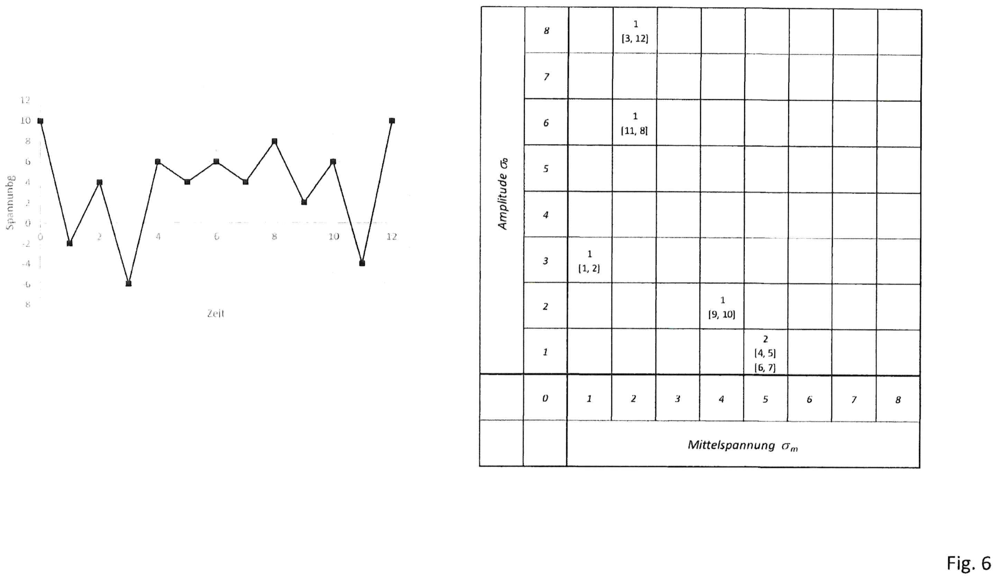

Grundlage für die Ermittlung der Umkehrpunkte an einem einzelnen FE-Knoten ist die sog. indizierte Rainflow-Zählung. In [7] ist dieses erweiterte Zählverfahren bereits angewendet worden, um Reihenfolgeeffekte zu erhalten. Bei diesem Verfahren werden in der Rainflow-Matrix je Element zusätzlich neben der Zyklenanzahl auch die für jeden Zyklus relevanten beiden Zeitpunkte gespeichert, siehe auch **Fig. 6****.**

Für jedes besetzte Element der Rainflow-Matrix erfolgt zunächst konventionell die Berechnung der partiellen Ermüdungsschädigungswerte, welche dann zur Gesamtschädigung aufsummiert werden.

Im Zuge der Omission wird daraufhin ein zweiter Durchlauf aller besetzten Elemente der Rainflow-Matrix vorgenommen, nun jedoch in aufsteigender Reihenfolge der mittelspannungskorrigierten Spannungsamplituden. Je Matrix-Element wird anhand des jeweiligen partiellen Schädigungswertes entschieden, wieviel der jeweiligen Zyklen weggelassen werden können, so dass insgesamt (also über alle bis dahin abgearbeiteten Matrix-Elemente) nicht mehr als ein zuvor definierter Anteil der Gesamtschädigung (z.B. 5 %) verlorengeht. Über die verbliebenen (nicht weggelassenen) Zyklen kann mit Hilfe der Indizierung der Rainflow-Matrix schlussendlich auf die an diesem Knoten erforderlichen Umkehrpunkte geschlossen werden.

Die erforderlichen Umkehrpunkte bezogen auf den Vergleichsspannungs-Zeit-Verlauf repräsentieren die Stützpunkte zur nachfolgenden Rekonstruktion der Last-Zeit-Verläufe.

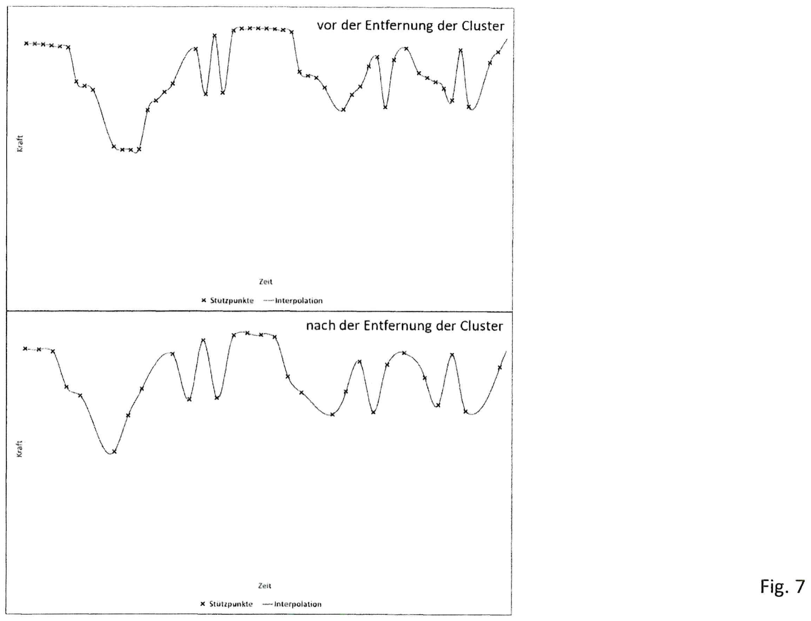

Mitunter verbleiben Cluster von Stützpunkten. Hierunter sind benachbarte Stützpunkte zu verstehen, welche über Last-Kanäle hinweg nahezu gleiche Lastwerte repräsentieren. Diese können durch die Berücksichtigung von mehr als nur einem einzelnen Hotspot bei der Omission entstehen, falls die schädigungsrelevanten Stützpunkte für die Hotspots einen kleinen zeitlichen Versatz aufweisen. Als Ursache hierfür können Überlagerungseffekte für die einzelnen Kanäle oder auch dynamische Effekte bei höherfrequenter Belastung (Massenträgheitswirkung) angesehen werden. Da Cluster spürbare Unstetigkeiten in die rekonstruierten Last-Zeit-Verläufe bringen können, werden diese in einem Korrekturschritt identifiziert und entfernt **(****Fig. 7****).** Dies kann sich in geringfügigem aber erfahrungsgemäß praktisch irrelevantem Maße auf die Ermüdungsschädigungswerte auswirken.

Zur Rekonstruktion aller Last-Zeit-Verläufe (Rekonstruktion der Betriebslastsignale) wird zwischen je zwei Stützpunkten mittels eines kubischen Polynoms interpoliert. Die vier Parameter des kubischen Polynoms werden über die Lage (Funktionswert) der beiden Stützpunkte sowie die Tangenten (1. Ableitung) an den beiden Stützpunkten ermittelt. Während sich die Funktionswerte an beiden Stützpunkten aus den ursprünglichen Last-Zeit-Verläufen ergeben, sind die Tangenten zunächst undefiniert. Mittels eines speziellen iterativen Algorithmus werden die Tangenten so bestimmt, dass die gesamten rekonstruierten Last-Zeit-Verläufe über den gesamten Zeitbereich bis zur 2. Ableitung stetig sind. Somit sind die rekonstruierten Betriebslastsignale nicht nur tagentenstetig (ohne Knicke), sondern auch krümmungsstetig. Diese Eigenschaften der Stetigkeit sind hinsichtlich der experimentellen Prüfung und insbesondere der hierzu im Vorfeld erforderlichen Prüfstandsiteration als vorteilhaft zu bewerten.

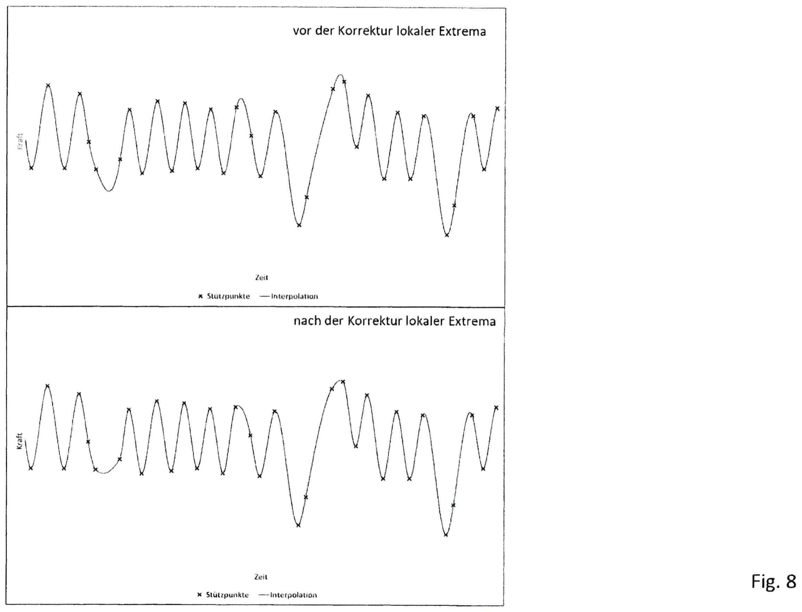

Ein Nachteil des beschriebenen Interpolationsverfahrens liegt darin, dass sich mitunter zwischen den Stützpunkten lokale Extrema ergeben, siehe auch **Fig. 8****.** Da die Stützpunkte den schädigungsrelevanten Umkehrpunkten in den Spannungs-Zeit-Verläufen entsprechen und damit in fast allen Fällen auch die Umkehrpunkte in den Last-Zeit-Verläufen repräsentieren, sollten idealerweise ausschließlich die Stützpunkte die lokalen Extrema in den rekonstruierten Last-Zeit-Verläufen repräsentieren, da es anderenfalls zu einer "künstlichen" Erhöhung der Ermüdungsschädigung kommen kann. Abhilfe schafft hier eine Korrektur der entsprechenden Polynomabschnitte (Anpassung der Neigungen an den Polynomrändern), durch welche die lokalen Extrema zwischen den Stützpunkten bis auf eine festzulegende Toleranzschwelle reduziert werden. Das führt zwar zu einem Verlust der Krümmungsstetigkeit an den Rändern der korrigierten Polynomabschnitte, die Tangentenstetigkeit bleibt jedoch stets erhalten.

Eine komplette Reduzierung der lokalen Extrema (Toleranzschwelle Null) wird hierbei nicht favorisiert, da die rekonstruierten Last-Zeit-Verläufe dann in Einzelfällen lokal sehr hohe Krümmungen aufweisen, die sich augenscheinlich in Knicken widerspiegeln (obwohl die Polynome mathematisch weiterhin tangentenstetig sind). Das gleiche Problem ergibt sich, wenn man die Tangenten (1. Ableitung) an den Stützpunkten von vornherein Null setzt, weshalb dieser Ansatz bereits früh verworfen worden ist. Eine niedrig gewählte Toleranzschwelle und damit die Akzeptanz noch geringfügiger verbleidender lokaler Extrema erweist sich hier als guter Kompromiss zwischen einer möglichst gering zu haltenden "künstlichen" Erhöhung der Schädigung und möglichst "glatter" (bzw. knickfreier) rekonstruierter Last-Zeit-Verläufe.

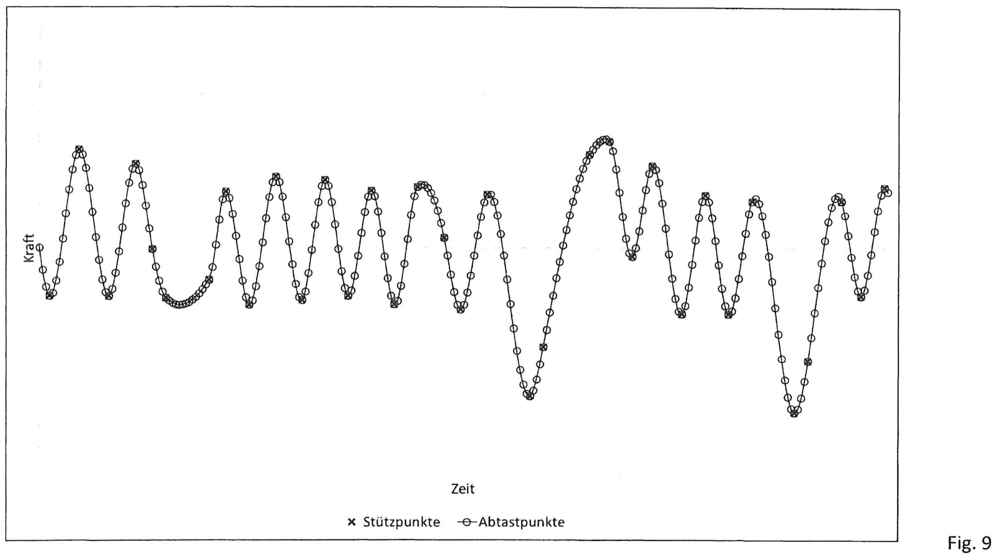

Die mittels der beschriebenen Interpolation rekonstruierten Last-Zeit-Signale werden abschließend auf Basis einer vorzugebenden Frequenz abgetastet (siehe **Fig. 9****)** und die hieraus resultierenden diskreten Lastdaten in geeignetem Format (z.B. rpc) in Dateien geschrieben, welche für die experimentelle Prüfung genutzt werden können.

### Berücksichtigung der Form des Beanspruchungskollektivs

Das Ermüdungsversagen (z.B. in Form eines technischen Anrisses) wird gemäß der ursprünglichen Form der Miner-Regel bei der sog. theoretischen Schadenssumme ***Dₜₕ***=1,0 unterstellt. Lässt sich der Wöhlerversuch (konstante Amplituden, Einstufenbeanspruchung) damit noch zutreffend beschreiben, zeigen Erfahrungen schon seit längerem, dass das Ermüdungsversagen im Gassnerversuch (variable Amplituden, Mehrstufenbeanspruchung) oft bereits beim Erreichen einer rechnerischen geringeren Schadenssumme, der sog. tatsächlichen Schadenssumme ***Dₜₐₜ***≤1,0, eintritt. Als hierfür ursächlich gelten u. a. Reihenfolgeeffekte (zeitliche Abfolge von Schwingspielen mit großen/kleinen Amplituden), welche in den bis heute angewendeten relativ einfachen Schadensakkumulationsrechnungen keine Berücksichtigung finden.

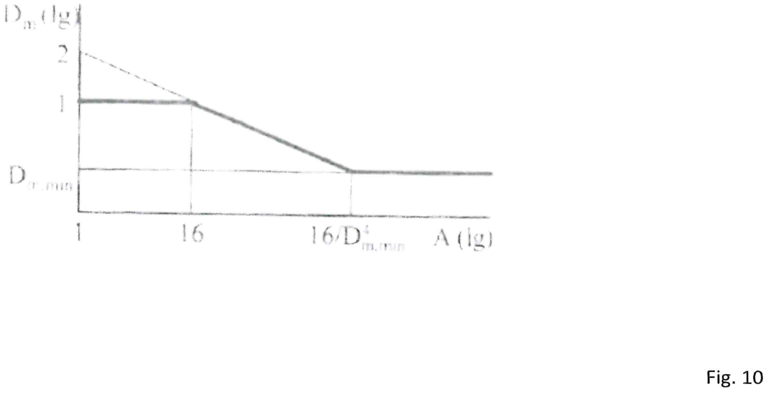

Heutige Berechnungsverfahren legen die tatsächliche Schadenssumme ***Dₜₐₜ*** in Abhängigkeit eines Parameters fest, welcher die Form (bzw. Völligkeit) des Beanspruchungskollektivs beschreibt. In der FKM-Richtlinie [8] wird als Parameter der horizontale Abstand ***Aₑₗₑ*** der Wöhlerlinie zur Gassnerlinie (Lebensdauerlinie) vorgeschlagen, welcher aus dem Beanspruchungskollektiv (Häufigkeitsverteilung der mittelspannungskorrigierten Spannungsamplituden) unter Ansatz der Miner-Variante Miner elementar berechnet werden kann. Die tatsächliche Schadenssumme***Dₜₐₜ*** -in der FKM-Richtlinie gleichbedeutend als effektive Miner-Summe ***Dₘ*** bezeichnet- kann dann in Abhängigkeit von ***Aₑₗₑ*** berechnet werden, wobei diese nach unten hin durch eine werkstoffgruppenabhängige Untergrenze ***D_{m,min}*** limitiert ist, siehe **Fig. 10****.**

Die verbesserte Treffsicherheit rechnerischer Lebensdauerprognosen unter Anwendung von ***Dₘ=Dₜₐₜ*** bei gleichzeitiger Anwendung der Modifizierung der Miner-Regel nach Haibach (Fortführung der Wöhlerlinie unterhalb des Abknickpunktes mit der Neigung 2k-1) ist bereits in [9] anhand von 293 Stahlproben aufgezeigt worden.

Durch die Omission und den damit verbundenen Verlust an kleinen Schwingspielen wird das Beanspruchungskollektiv völliger, der Abstand ***Aₑₗₑ*** zwischen Wöhlerlinie und Gassnerlinie kleiner und die tatsächliche Schadenssumme ***Dₜₐₜ=Dₘ*** größer.

Damit das Ergebnis des Ermüdungsfestigkeitsversuchs durch die Omission nicht verfälscht wird, muss die Relation von Ermüdungsbeanspruchung zu Ermüdungsbeanspruchbarkeit erhalten bleiben. Die Ermüdungsbeanspruchung wird durch die rechnerische Schädigung infolge der Last-Zeit-Verläufe repräsentiert und unterliegt prämissengerecht keinen signifikanten Veränderungen durch die Omission. Die Ermüdungsbeanspruchbarkeit wird durch die tatsächliche Schadenssumme ***Dₜₐₜ=Dₘ*** repräsentiert, welche sich durch die Omission in gewissem Maße erhöht.

Schlussfolgernd wird vorgeschlagen, die Dauer von Prüfungen unter Nutzung mittels Omission verkürzter Last-Zeit-Verläufe um das Verhältnis der tatsächlichen Schadenssummen ***Dₜₐₜ=Dₘ*** nach und vor Omission zu erhöhen.

Hinweis: Um eine Verwechslung mit den aus den Betriebslasten resultierenden vorhandenen Schadenssummen (im Sinne der Ermüdungsbeanspruchung) auszuschließen wird anstelle der Bezeichnung tatsächliche Schadenssumme ***Dₜₐₜ=Dₘ*** nachfolgend die Bezeichnung ertragbare Schadenssumme ***Dₘ*** (im Sinne der Ermüdungsbeanspruchbarkeit) verwendet.

### Beispiel:

Ein Bauteil soll einer Ermüdungsfestigkeitsprüfung mit einem Last-Zeit-Verlauf unterzogen werden, welcher 10.000 mal zu wiederholen ist. Die Omission führt an der ermüdungskritischen Stelle des Bauteils infolge des nunmehr völligeren Beanspruchungskollektivs zu einer Erhöhung der ertragbaren Schadenssumme von ***Dₘ**=*0,5 auf ***Dₘ**=*0,6*.* Unter Verwendung des durch die Omission verkürzten Last-Zeit-Verlaufs ist die Prüfung entsprechend dem Verhältnis 0,6/0,5=1,2 also mit 10.000·1,2=12.000 Wiederholungen durchzuführen.

Ein Teil der durch die Omission erreichten Prüfzeitverkürzung muss entsprechend in diesen Korrekturvorschlag investiert werden, wobei aber erwartet werden kann, dass nur ein sehr geringer Anteil der durch die Omission erreichten Prüfzeitverkürzung wieder verlorengeht.

Ein Anwendungsbeispiel des erfindungsgemäßen Verfahrens ist nachstehend erläutert:

### Prüfszenario

Der einleitend dargestellte Hinterachsquerlenker (vgl. **Fig. 2****)** ist mittels eines 4kanaligen Betriebslastsignals zu prüfen. Das Betriebslastsignal hat eine Dauer von 34,4 s und ist 20.000 mal zu wiederholen, womit sich eine Gesamtprüflaufzeit von 191 Stunden (ca. 8 Tage) je Bauteil ergibt.

Mit Hilfe des dargestellten Omissionsverfahrens ist die Prüfzeit zu verkürzen.

Hierzu erfolgt zunächst eine Full-Field-Schädigungsrechnung und die Identifizierung relevanter Schädigungshotspots, welche die Grundlage der Omission bilden. Es wird ein maximaler zulässiger Schädigungsverlust von 1 % als Grundlage für die Omission angesetzt.

### Ergebnis der Omission

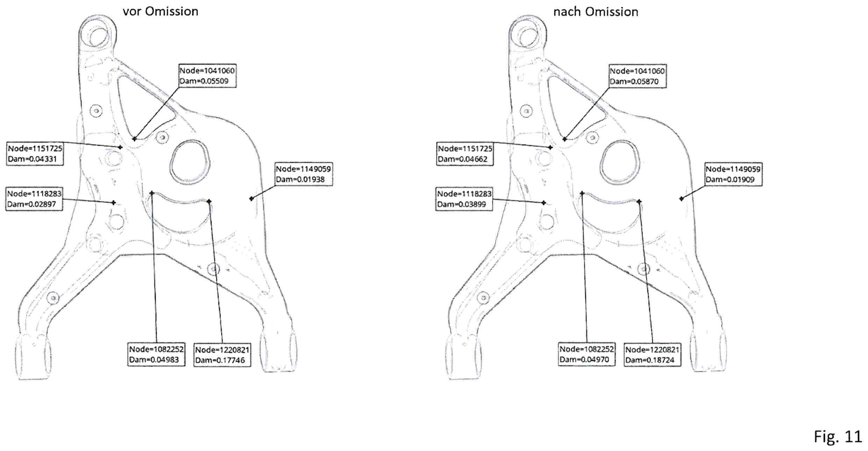

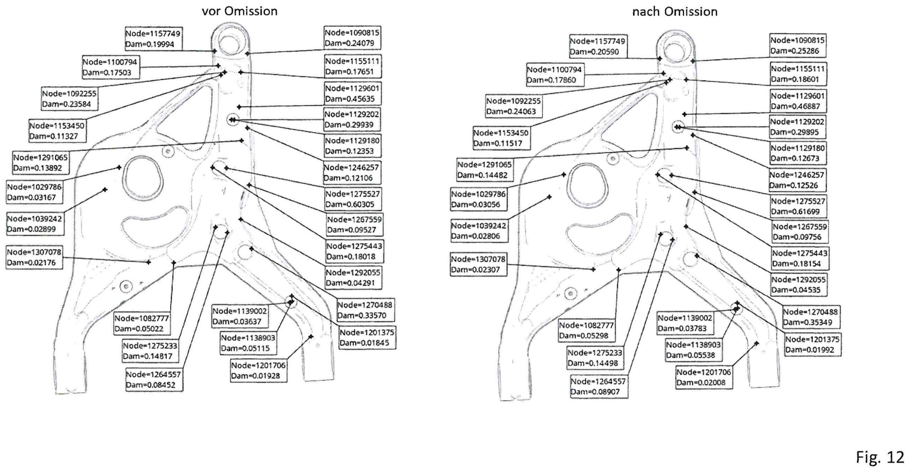

Die Ermüdungsschädigungen im Vergleich vor und nach der Omission zeigen **Fig. 11** und **Fig. 12** sowie die Tabelle in **Fig. 13****.**

Der Einfluss der Omission auf die Schädigungswerte an den Hotspots ist generell vernachlässigbar gering.

An vielen Hotspots ist (zunächst kontraintuitiv) eine leichte Erhöhung der Schädigungswerte zu verzeichnen, was daran liegt, dass aus der Interpolation der Last-Zeit-Verläufe vereinzelt zwischen benachbarten Stützpunkten lokale Extrema resultieren, welche zugunsten eines stetigeren Last-Zeit-Verlaufs nicht komplett reduziert worden sind, vgl. **Fig. 8****.** Eine Ausnahme bildet der Hotspot 1118283 mit einer deutlichen Erhöhung der Schädigung um 35 %. Ursache hierfür ist, dass an diesem Hotspot alle Spannungsamplituden unterhalb des Abknickpunktes der Wöhlerlinie liegen, wodurch bei einer Änderung der Belastung die nach Miner modifiziert geltende deutlich flachere Wöhlerlinienneigung zum Tragen kommt. Dieser Effekt tritt jedoch nur bei vergleichsweise sehr geringen Schädigungswerten auf und kann daher akzeptiert werden.

An anderen Hotspots liegt eine leichte Reduktion der Schädigungswerte vor, welche den definierten maximal zulässigen Schädigungsverlust von 1 % teilweise überschreitet. Der Grund hierfür ist wiederum in der Entfernung von Cluster benachbarter Stützpunkte, vgl. **Fig. 7**, zu suchen. Die Schädigungsverluste verbleiben jedoch weiterhin in einer völlig akzeptablen Größenordnung.

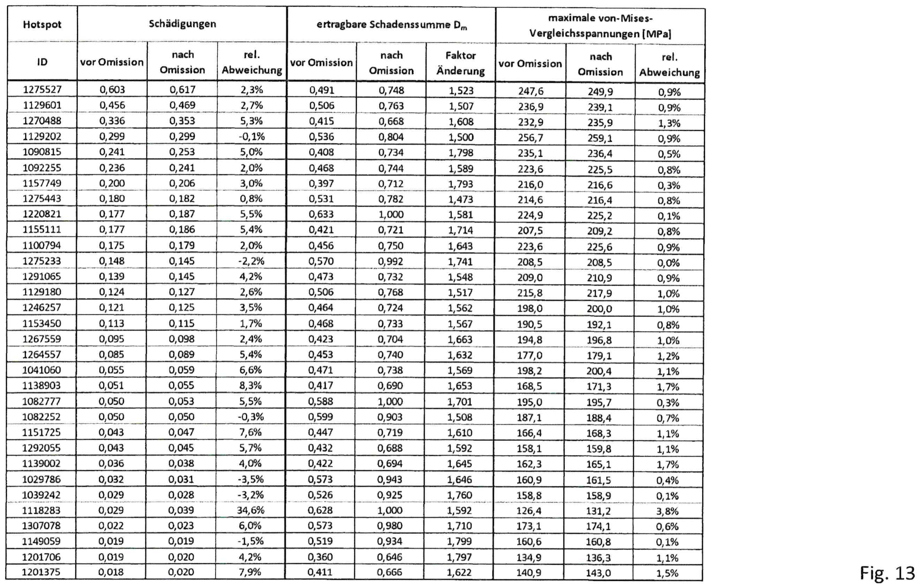

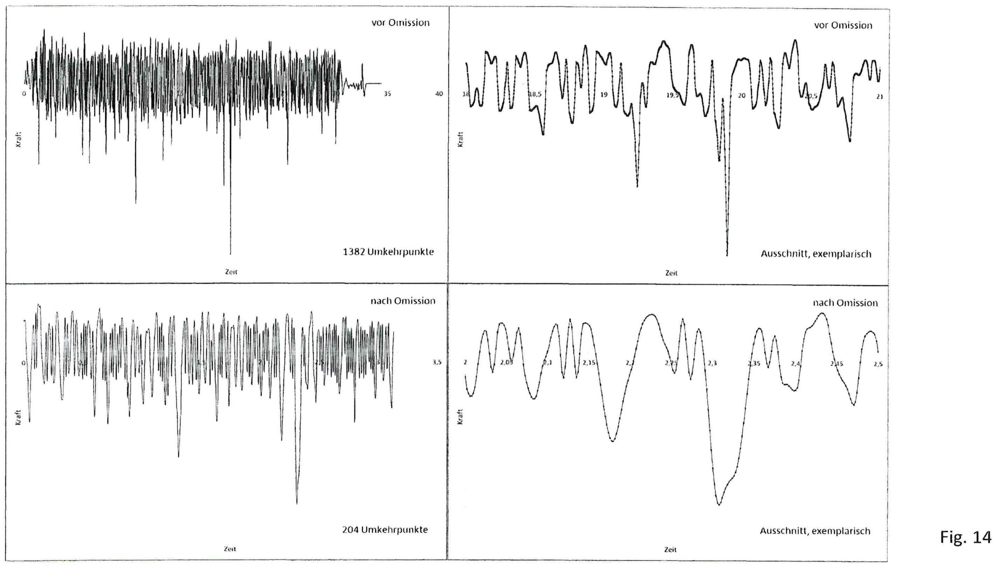

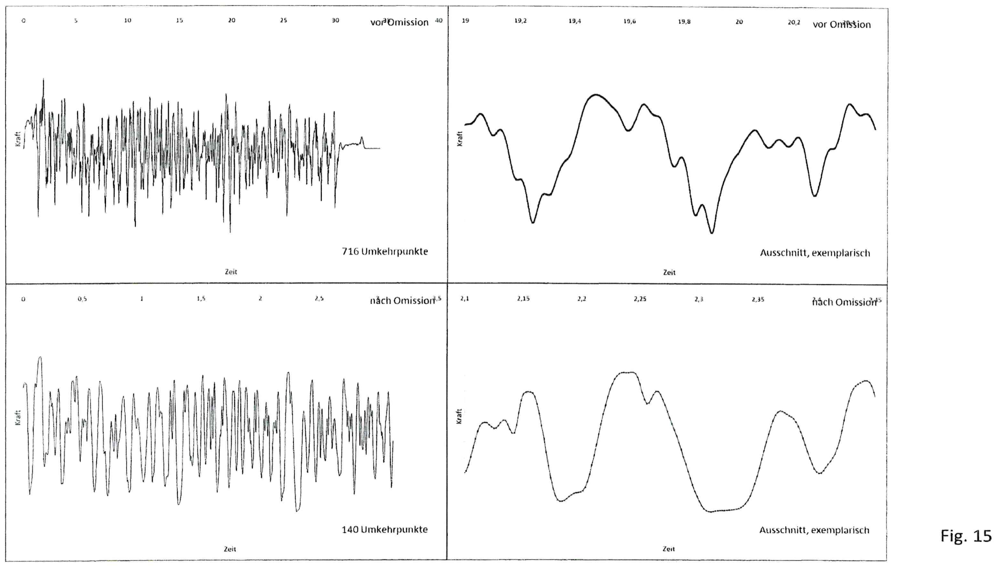

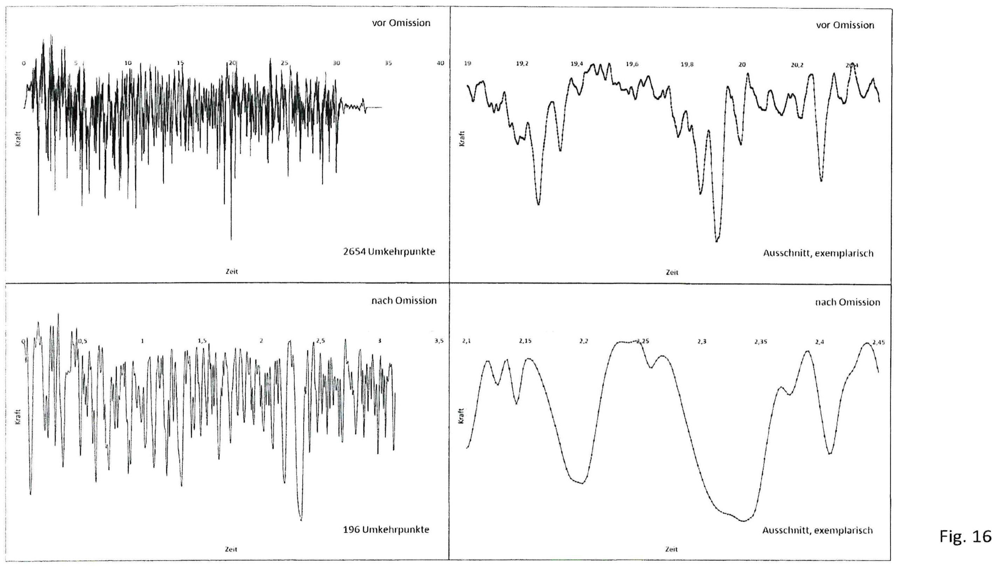

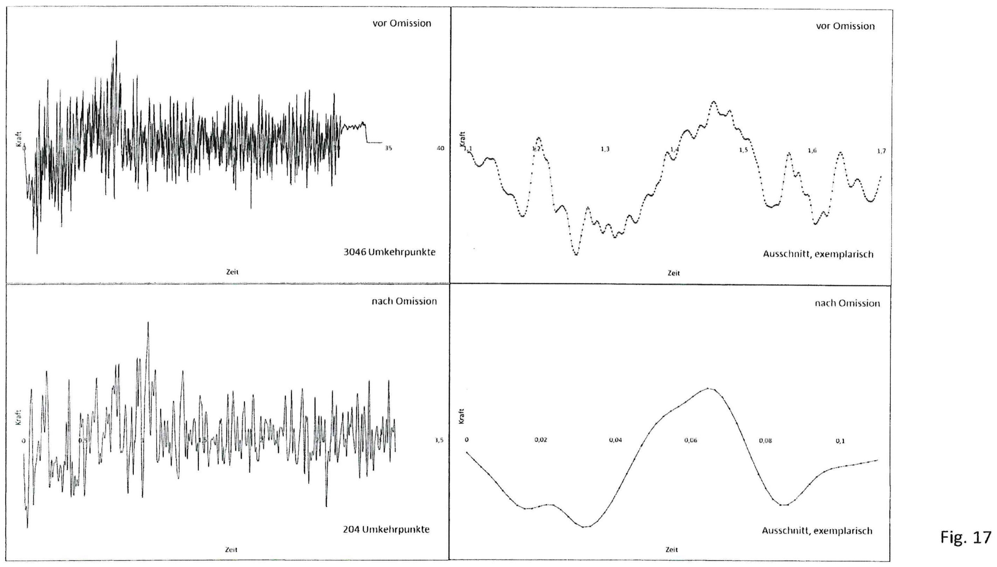

In **Fig. 13** sind außerdem die von-Mises-Vergleichsspannungen aufgeführt, welche über die Zeit an den einzelnen Hotspots maximal auftreten. Die Omission führt erwartungsgemäß zu keiner signifikanten Änderung der Maximalspannungen. Die geringfügigen Spannungserhöhungen sind ebenfalls darauf zurückzuführen, dass aus der Interpolation der Last-Zeit-Verläufe vereinzelt zwischen benachbarten Stützpunkten lokale Extrema resultieren, welche zugunsten eines stetigeren Last-Zeit-Verlaufs nicht komplett reduziert worden sind, vgl. **Fig. 8****.** Im Hinblick auf die Streckgrenze des Werkstoffs von 260 MPa, die somit nur sehr knapp oberhalb der größten maximalen von-Mises-Vergleichsspannungen liegt, ist dieses Verhalten von Bedeutung, da eine Erhöhung der maximalen Vergleichsspannungen -was bei anderen Verfahren zur Versuchszeitverkürzung der Fall wäre-Eigenspannungen induzieren würde, welche das Ermüdungsfestigkeitsverhalten verfälschen könnten. **Fig. 14** bis **Fig. 17** illustrieren die Last-Zeit-Verläufe für die 4 Kanäle vor und nach Omission. Wichtig ist hier, dass das zeitliche Zusammenwirken aller Kanäle durch das Omissionsverfahren vollständig erhalten bleibt.

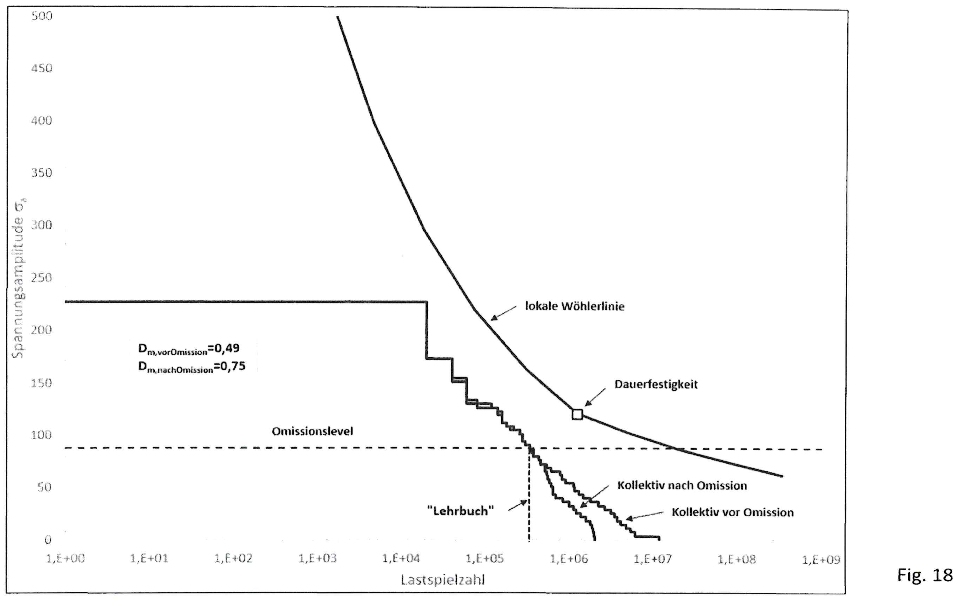

**Fig. 18** zeigt das Amplitudenspannungskollektiv, exemplarisch für den maximal geschädigten Hotspot. Das Omissionslevel beträgt hier 72 % (bezogen auf die lokale Dauerfestigkeit). Erwähnenswert ist hier einerseits, dass es oberhalb des Omissionslevels ganz geringfügige Änderungen im Kollektivverlauf gibt, was der Entfernung von Cluster von Stützstellen zugeschrieben werden kann. Dieser Einfluss ist jedoch nicht relevant und vernachlässigbar. Andererseits ist bemerkenswert, dass unterhalb des Omissionslevels nicht "lehrbuchgemäß" alle Spannungsamplituden abgeschnitten werden und sich die typische vertikale Begrenzung im Kollektivverlauf hier nicht zeigt. Die Ursache hierfür liegt in der gegenseitigen Beeinflussung der einzelnen Schädigungshotspots - die "große" (schädigungsrelevante) Spannungsamplitude am Hotspot A verbleibt gewissermaßen als "kleine" Spannungsamplitude am nebenliegenden Hotspot B. Würde die Omission nur auf Basis eines einzelnen Schädigungshotspots am Bauteil vorgenommen, läge auch der "lehrbuchgemäße" Verlauf des Kollektivs nach der Omission vor.

Nach Anwendung des Omissionsverfahrens verbleibt ein 4-kanaliges Last-Zeit-Signal mit einer Dauer von 3,5 s. Bei 20.000 Wiederholungen entspräche dies einer Gesamtprüflaufzeit von 19,4 Stunden (ca. 0,8 Tage) je Bauteil und einer Reduktion der Prüfzeit durch die Omission um 90 %. Infolge der Omission erhöhen sich jedoch die ertragbaren Schadenssummen, maximal auf das etwa 1,8-fache. Daher wird die entsprechende Erhöhung der Wiederholzahl auf 36.000 empfohlen, was die Gesamtprüflaufzeit auf 35 Stunden (ca. 1,5 Tage) erhöht. Es verbleibt weiterhin eine enorme Prüfzeiteinsparung von 82 %.

Die Omission als effizientes und "minimal invasivstes" Verfahren zur Prüfzeitverkürzung wird prozedural in die heute etablierten modernen Simulationsmethoden der Betriebsfestigkeit eingebunden. Basis bildet eine Erweiterung der Rainflow-Zählung mittels Indizierung, was die Identifizierung der schädigungsrelevanten Umkehrpunkte in den lokalen Spannungs-Zeit-Verläufen an den jeweiligen Schädigungshotspots erlaubt. Die schädigungsrelevanten Umkehrpunkte repräsentieren die Stützstellen in den durch Interpolation und Abtastung neu erzeugten Last-Zeit-Verläufen.

Die wesentlichen Vorteile des vorgestellten Omissionsverfahrens sind:
- Berücksichtigung der lokalen mechanischen Beanspruchungen am Bauteil
- Möglichkeit der Berücksichtigung beliebig vieler Lastkanäle, deren Relevanz durch das Verfahren automatisch gewichtet wird
- Erhalt des Zusammenwirkens der Lasten aus den einzelnen Lastkanälen
- Rekonstruktion für die Prüfung geeigneter (leichter iterierbarer) LastZeit-Signale, welche über den ganzen Zeitbereich tangentenstetig und über weite Bereiche auch krümmungsstetig sind
- Vorgabe eines maximal erlaubten Schädigungsverlustes anstelle Vorgabe eines Omissionslevels
- Kein Einfluss der Omission auf das Ermüdungsfestigkeitsverhalten, da
   o die Ermüdungsschädigungen erhalten bleiben
   o die Maximalspannungen erhalten bleiben
   o die Amplitudenspannungskollektive weitgehend (bis auf das Weglassen kleiner Amplituden) erhalten bleiben -Berücksichtigung der durch die Omission erhöhten Kollektivvölligkeiten und dadurch bedingten erhöhten ertragbaren Schadenssummen durch eine äquivalente Laufzeitverlängerung
   o die Reihenfolgeeffekte erhalten bleiben

Die mit der Anwendung des Omissionsverfahrens notwendige Abbildung des Bauteils in einem Simulationsmodell auf Basis der Finite-Elemente-Methode (FEM) stellt hierbei einen akzeptablen Zusatzaufwand dar. Erfahrungsgemäß liegen diese Simulationsmodelle im Ergebnis der Bauteilentwicklung oft bereits vor. Sollte dennoch die Erstellung eines Simulationsmodell erforderlich sein, können zum Zweck der Omission gewisse Modellvereinfachungen (z. B. Verzicht auf die detaillierte Modellierung von Schnittstellen) vorgenommen werden.

Die benannten Vorteile sind am Beispiel eines 4-kanalig belasteten Hinterachsquerlenkers veranschaulicht worden. Die Omission stellt hier eine Prüfzeitreduktion von 82 % in Aussicht, ohne dass hierdurch eine relevante Beeinflussung des mechanischen Verhaltens bzw. des Ermüdungsverhaltens des Bauteils festzustellen ist.

Die Anwendung des hier dargestellten Omissionsverfahrens im Speziellen (bzw. auch der Omission im Allgemeinen) ist zunächst auf metallische Bauteile beschränkt, deren Ermüdungsfestigkeitsverhalten weitgehend unabhängig von der Belastungsfrequenz ist.

Die Anwendung der Omission für Bauteile, welche neben den mechanischen auch korrosiven Lasten (z.B. Aluminiumbauteile unter Salzwasserbeaufschlagung) ausgesetzt sind, bleibt ebenfalls zukünftigen Untersuchungen vorbehalten. Denkbar ist eine entsprechend der Prüfzeitverkürzung gesteigerte Aggressivität des korrosiv wirkenden Mediums wie diese z.B. auch in [10] vorgeschlagen wird.

### Literatur

[1] Vajen, Henning: "Untersuchung des Einflusses praxisnaher Erprobungsbedingungen auf die Schwingfestigkeit von Bauteilen des CommonRail-Dieseleinspritzsystems", Dissertation, Materialprüfungsanstalt Universität Stuttgart, 2014.
[2] Radaj, D.; Vormwald, M.: "Ermüdungsfestigkeit - Grundlagen für Ingenieure", 3. Auflage, Springer, 2007.
[3] Hailing, Tian; et al.: "Influence of low load truncation level on crack growth for Al 2324-T39 and Al 7050-T7451", Chinese journal of aeronautics 22.4 (2009): 401406.
[4] Healey, Rowan; et al.: "The application of cycle merging and an extension of a fatigue spectrum simplification methodology from unidirectional to woven composite materials", Composites Part C: Open Access 8 (2022): 100283.
[5] Clark, G.; T. J. Van Blaricum: "Load spectrum modification effects on fatigue of impactdamaged carbon fibre composite coupons", Composites 18.3 (1987), 243-251.
[6] Wallbrink, Chris: "Smart load spectrum compression through the preservation of damage content", 17th Australian International Aerospace Congress (AIAC17), Melbourne, Australia, 2017.
[7] Healey, Rowan; et al: "A review on aircraft spectra simplification techniques for composite structures" Composites Part C: Open Access 5 (2021): 100131.
[8] Rennert, R.; Kullig, E.; Vormwald, M.; Luke, M.: "FKM-Richtlinie, rechnerischer Festigkeitsnachweis für Maschinenbauteile", 7. überarbeitete Ausgabe, VDMAVerlag, 2020.
[9] Hinkelmann, K.: "Korrekturfunktionen zur Verbesserung der rechnerischen Lebensdauerabschätzung bei schwingender Beanspruchung", Dissertation, Papierflieger Verlag, 2012.
[10] Sonsino, C.M.: "Versuchszeitverkürzung in der Betriebsfestigkeitsprüfung." MP Materialprüfung, (45/4), 2003.

## Patentansprüche

1. Verfahren zur simulationsgestützten Omission von Betriebslastsignalen zur Verkürzung von Ermüdungsfestigkeitsprüfungen, insbesondere für mehrkanalig belastete Bauteile, **gekennzeichnet durch**
1. Lokale Spannungsberechnung mittels der Finite-Elemente-Methode (FEM) und
2. Lokale Ermüdungsschädigungsberechnung und Identifizierung der relevanten Umkehrpunkte, bestehend aus den Teilschritten:
2.1. Erstellung ***Vergleichsspannungs-Zeit-Verlauf,***
2.2. **Indizierte** Rainflow-Zählung und Klassierung,
2.3. Schadensakkumulation.
3. Rekonstruktion der Last-Zeit-Verläufe anhand der relevanten Zeitpunkte

2. Verfahren nach Anspruch 1, **dadurch gekennzeichnet, dass** je zu analysierendem FE-Knoten (Schädigungshotspot) des Bauteils die erforderlichen Umkehrpunkte des an dem jeweiligen Knoten vorliegenden lokalen Vergleichsspannungs-Zeit-Verlaufs durch indizierte Rainflow-Zählung zu ermitteln sind, welche zum wesentlichen Schädigungsbeitrag führen, wobei an jedem FE-Knoten nach Bearbeitung eine Menge an Umkehrpunkten vorliegt, wobei die sich über alle zu analysierenden FE-Knoten hinweg ergebende Vereinigungsmenge alle Umkehrpunkte enthält, welche für die Erstellung der neuen Last-Zeit-Verläufe erforderlich sind,
wobei für jedes besetzte Element der Rainflow-Matrix zunächst konventionell die Berechnung der partiellen Ermüdungsschädigungswerte erfolgt, welche dann zur Gesamtschädigung aufsummiert werden und
im Zuge der Omission daraufhin ein zweiter Durchlauf aller besetzten Elemente der Rainflow-Matrix vorgenommen wird, jedoch in aufsteigender Reihenfolge der mittelspannungskorrigierten Spannungsamplituden und je Matrix-Element anhand des jeweiligen partiellen Schädigungswertes entschieden wird, wie viele der jeweiligen Zyklen weggelassen werden können, so dass insgesamt -über alle bis dahin abgearbeiteten Matrix-Elementenicht mehr als ein zuvor definierter Anteil der Gesamtschädigung verlorengeht, wobei über die verbliebenen -nicht weggelassenen- Zyklen mit Hilfe der Indizierung der Rainflow-Matrix auf die an diesem Knoten erforderlichen Umkehrpunkte geschlossen wird.

3. Verfahren nach Anspruch 2, **dadurch gekennzeichnet, dass** bei der Omission entstehende Cluster von Stützpunkten, welche als benachbarte Stützpunkte zu verstehen sind, die über Last-Kanäle hinweg nahezu gleiche Lastwerte repräsentieren, in einem Korrekturschritt identifiziert und entfern werden.

4. Verfahren nach einem der Ansprüche 1 bis 3, **dadurch gekennzeichnet, dass** zur Rekonstruktion aller Last-Zeit-Verläufe zwischen je zwei Stützpunkten mittels eines kubischen Polynoms interpoliert wird und die vier Parameter des kubischen Polynoms über die Lage (Funktionswert) der beiden Stützpunkte sowie die Tangenten (1. Ableitung) an den beiden Stützpunkten ermittelt werden, wobei sich die Funktionswerte an beiden Stützpunkten aus den ursprünglichen Last-Zeit-Verläufen ergeben und die Tangenten mittels eines iterativen Algorithmus so bestimmt werden, dass die gesamten rekonstruierten Last-Zeit-Verläufe über den gesamten Zeitbereich bis zur 2. Ableitung stetig sind.

5. Verfahren nach Anspruch 4, **dadurch gekennzeichnet, dass** eine Korrektur von Polynomabschnitten zwischen Stützpunkten vorgenommen wird, zwischen denen sich lokale Extrema ergeben, wobei durch die Korrektur die lokalen Extrema auf eine festzulegende Toleranzschwelle reduziert werden.

6. Verfahren nach Anspruch 4 oder 5, **dadurch gekennzeichnet, dass** die mittels der beschriebenen Interpolation rekonstruierten Last-Zeit-Signale abschließend auf Basis einer vorzugebenden Frequenz abgetastet und die hieraus resultierenden diskreten Lastdaten in geeignetem Format in Dateien geschrieben werden, welche für die experimentelle Prüfung genutzt werden können.
